# EUROPEAN PATENT SPECIFICATION

(11) **EP 3 237 991 B1**
(45) Date of publication and mention of the grant of the patent: **30.06.2021**
(21) Application number: 15821045.0
(22) Date of filing: 18.12.2015
(51) Int. Cl.: G06F 1/16, H04M 1/725, G06F 3/01

(54) **COMMUNICATION SYSTEM COMPRISING HEAD WEARABLE DEVICES**
KOMMUNIKATIONSSYSTEM MIT KOPFTRAGBAREN VORRICHTUNGEN
SYSTÈME DE COMMUNICATION COMPRENANT DES DISPOSITIFS PORTABLES DE TÊTE

(30) Priority: 22.12.2014 EP 14199738
(43) Date of publication of application: 01.11.2017
(73) Proprietor: Koninklijke Philips N.V., 5656 AG Eindhoven (NL)
(72) Inventor: SHRUBSOLE, Paul Anthony, 5656 AE Eindhoven (NL); TIBERI, Luca, 5656 AE Eindhoven (NL); DEES, Walter, 5656 AE Eindhoven (NL)
(74) Representative: Coops, Peter
(86) International application number: PCT/EP2015/080381
(87) International publication number: WO 2016/102336

(56) References cited:
- EP-A1- 2 610 708
- WO-A1-2011/133590
- WO-A1-2012/167200
- WO-A1-2015/081334
- US-A1- 2014 010 220
- US-A1- 2014 152 538
- US-A1- 2014 368 980
- US-B1- 8 893 164

## Description

### FIELD OF THE INVENTION

The invention relates to a head wearable device for use in an operating environment, the head wearable device arranged for wireless communication.

The invention further relates to a communication system comprising a head wearable device, a method of communicating, and a computer program product for use in the head wearable device.

The invention relates to the field of wireless communication, e.g. via Wi-Fi, and more specific to head wearable devices, for example functioning as a dockee and a host for accessing one or more peripherals of the host by the dockee. In this context peripherals may be external devices like a display, keyboard, or mouse, or peripherals built in a host like a loudspeaker or storage unit. For example, a TV may be also a host, i.e. the host is built in the TV and constitutes a host that may provide access to multiple peripherals. Accessing and/or using such peripherals and/or any other internal or external resources of the host may be called a service provided by the host.

### BACKGROUND OF THE INVENTION

Wireless communication may be used to communicate between various mobile devices like head wearable devices such as smart glasses or smart goggles, tablets or mobile phones. For example wireless docking enables a mobile device (functioning as a dockee) to access a set of peripherals (such as a mouse, display, machine tool, etc) locally attached through a wire or wirelessly connected to a further device (called a host or a wireless docking station) through a set of general message exchange protocols over a wireless link (e.g. based on using Wi-Fi as described in IEEE802.11). A host coupled together with one or more wired or wireless peripherals may be called a wireless docking environment.

Wireless docking is known, for example, from WO 2012/117306A1. A wireless docking station may enable a wireless secured communication between at least one dockee and a host. The wireless docking host may provide information about its presence through a Wi-Fi beacon that dockees can use to select and initiate connections with a chosen host.

WO2012/167200 describes selective admission of client devices into a data sharing session with a host. The host user may select a client device based on proximity of the client to the host, or visually identifies the user of the client device. When the host determines to admit the client device, the devices have to be brought into proximity to create a local audio/visual channel using a camera or a microphone. An identifier is provided from the client device to the host via the channel. When so admitted, the client and host device may communicate.

US2014/0368980A1 describes a communication system comprising a head wearable device having a camera. The wearable computing system may receive a command from a user requesting assistance with operation of the wearable computing system and may initiate a technical support session to request the assistance. The wearable computing system may also provide an audio communication channel between the user and the technical support associate through a microphone coupled to the wearable computing system.

EP2610708 describes a procedure for pairing involving gestures made with the device to be paired. The principle is based around an accelerometer in the device and no mention is made of using a visual property of the other device.
WO 2015/081334 A1 discloses systems and methods to allow a user to interact with a head wearable augmented reality device.

### SUMMARY OF THE INVENTION

Various people may be wearing head wearable devices like smart glasses in practical operating environments (e.g. office environment, user home having multiple active users, operating theatre, air traffic control, finance institution, software development, etc.). Further outdoor examples may be construction workers or emergency professionals. Any person wearing a head wearable device is called a wearer in this document, or a user, where referring to activities performed or controlled via the head wearable device. For example, a user may be a wearer of a head wearable device and also have a smartphone or tablet that is wirelessly coupled to the head wearable device, e.g. via WiFi. The phone or tablet may have data that is to be shared, or the user may want to use a peripheral, e.g. a large display coupled to a host. In this document the word peripheral includes any physical device that is coupled to a host and provides functionality for a user such as input or output of information, interaction or control, e.g. displays or interactive tools. Examples of such functionality include:
- select which information sources are displayed at a given time;
- zoom into a certain area of a display;
- show additional information;
- switch some peripheral devices on/off;
- create annotations;
- send/receive messages;
- communicate with other people (e.g. video chat).

So the user may want to communicate with some other user or device in the operating environment, e.g. exchanging audio or video information, or for using or sharing a peripheral. However, setting up a communication session with a specific user may be difficult, e.g. if multiple users are present in the operating environment, or contacting the selected user is difficult due to a noisy environment.

It is an object of the invention to provide a communication system that enables setting up a communication session with a further user in the operating environment while reducing the amount of user interaction and time needed.

For this purpose, a head wearable device, a method of communicating, and a computer program product for use in the head wearable device are provided as defined in the independent claims as appended.

The above features have the following effect. In use, the camera of the head wearable device such as smart glasses will capture the environment image and the image will be processed by the first processor. When the head wearable device is worn, the camera will be directed in the viewing direction of the wearer. The dockee processor may detect a focus position based on the viewing direction of a wearer relative to the operating environment. The focus position may correspond to a center position in the environment image corresponding to a field of view of the wearer looking straight ahead due to the eyes of the user being in a neutral, centered orientation. In the image, near the focus position, a further head wearable device is detected to which the wearer of the first head wearable device is looking by using the viewing direction of the wearer.

The viewing direction may be used implicitly by selecting a central part of the image, while the camera is directed forward, i.e. in the direction of the head of the wearer, the central part coinciding with the point at which the wearer is looking when the eyes of the wearer are in a neutral position.

Alternatively, the viewing direction may be actively detected by determining the position of the eyes of the wearer, e.g. by eye tracking known as such. Thereto the processor may be arranged for detecting a viewing direction by detecting an actual orientation of at least one eye of the wearer and determining an offset of the actual orientation from the centered orientation, and shifting the focus position in dependence of the offset. The focus position may correspond to a center position in a field of view of the wearer looking straight ahead due to an eye of the user being in a centered orientation, or may correspond to an off center position due to the eye of the user looking at different direction than where the head wearable device is pointing at. The eye orientation may be detected by an inwards facing camera pointed at the eyes of the user. Advantageously the focus position is augmented based on the actual viewing direction of the wearer, and the head wearable device is detected based on the augmented focus position in the image.

Subsequently the further head wearable device is identified based on a remotely detectable visual property at an operational distance, i.e. a distance at which the wearers are active in the operating environment operationally performing work or other actions, the visual property being at least one of coded light as emanating from the further head wearable device and a gesture of the wearer of the further head wearable device, and the system advantageously infers that the head wearable device as identified is worn by a further wearer that the first wearer wants to select for communication. The identifying may include selecting amongst a possible plurality of other head wearable devices, as multiple head wearable device may be detected around the focus position. For example, the selection may also be based on the remotely detectable visual property, e.g. a property of the other head wearable device as a whole and/or the other wearer, on the closeness of the further head wearable device to the focus position of the first wearer, the orientation of the other head wearable device, or the orientation of the head, face or eyes of the other wearer. The orientation may be towards the first head wearable device and so be indicative of eye contact between the other wearer and the first wearer, and hence indicate which head wearable device is to be selected.

A visual marker may, for example, be a graphical code that is sufficiently large to be remotely detectable. Such visual markers are designed for reading by an image processor from an environment image taken at an operational distance showing the operational environment in which the so coded device is used, and may contain further information on the head wearable device. The visual marker may, for example, be a label having a graphical symbol and/or text of a size that is remotely detectable. Advantageously, such a symbol or text may be detected by an image processor from the environment image, and clearly identify the respective head wearable device. The visual marker may, for example, be an active visual marker displayed on a display of the peripheral.

Advantageously, the marker may be created or adapted dynamically by the head wearable device to represent the actual service or functions available or required, or a session type that is proposed.

Subsequently a communication session is established between the head wearable device of the first wearer and the head wearable device of the further wearer. The communication session is established via said wireless communication and may use any protocol or messaging system, e.g. Wi-Fi. The session may further include communication of data on application level, such as voice, video, text or other data. The communication session also has a level of security due to the wearer being involved in targeting the further head wearable device by eye contact. Advantageously the session is established based on the viewing direction of the first wearer, i.e. substantially automatically based on eye contact and without wearers having to touch the head wearable device and without requiring specific commands of the users. For example in a noisy or outdoor operating environment user may easily contact each other because they are within the visual field of view from each other but are unable to hear/see details effectively during their tasks.

Optionally, in the head wearable device, the dockee processor is arranged for detecting a viewing distance from the eye of the wearer to the further head wearable devices, and shifting said focus position in dependence of the viewing distance. Advantageously the focus position is augmented by the actual viewing distance to the head wearable devices, and the further head wearable device is selected based on the augmented focus position in the image.

In an embodiment in the first head wearable device, the first processor is arranged for establishing the communication session comprising detecting a session confirmation by detecting a gesture of the wearer of the further head wearable device. Additionally or alternatively, in the further head wearable device the further processor is arranged for establishing the communication session comprising detecting a session request by detecting a gesture of the wearer of the first head wearable device.

The features have the following effect. In use, a communication session may be confirmed (or denied) by a gesture of the other party. Also, a communication session may be requested by a gesture of the other party. For detecting a gesture the further head wearable device may also be equipped with a camera and image processor functions, or, for example with a gyroscope for detecting a nodding request or confirmation. Advantageously, a session may be started and/or confirmed by using gestures of the wearer, which provides an intuitive control of the communication session.

In an embodiment the first head wearable device comprises an inward facing camera for capturing an eye image of an eye of the wearer, and the first processor is arranged for detecting the viewing direction of the wearer based on the eye image. Advantageously, the viewing direction is detected accurately based on the eye image.

In an embodiment of the first head wearable device, the first processor is arranged for said identifying the further head wearable device based on the remotely detectable visual property further being at least one of
- a visual mark as provided on the further head wearable device;
- a visual property of the further head wearable device;
- a visual property of the wearer of the further head wearable device;

In this context visual means visual detectable radiation by any camera or radiation detecting system present on the head wearable device, so this includes thermal imaging, Time of Flight or similar 3D imaging, or other non-human visual methods that may be employed for identification of the wearer and/or the head wearable device. Alternatively, or additionally, the detection could also include detection of RF signal strength of the further device.

The features have the following effect. In use, when multiple head wearable devices are present in the environment image, identification is made based on a recognizable property of the head wearable device and/or its wearer. For example, the processor may be arranged to first visually identify a human form and then focus on the area where a wearable device marker might be located for detecting a visual mark.

Based on said identifying, e.g. identifying data or codes, a respective head wearable device is contacted via the wireless communication. For example, the code as detected in the coded light is coupled to at least one code in messages that are exchanged during establishing the communication session via wireless communication. Or a database is available having data on respective wearers, respective head wearable devices, visual markers, electronic codes and addresses, etc.

In an embodiment of the first head wearable device, the first processor is arranged for establishing the communication session comprising
- generating a session request and sending, via the wireless communication, the session request to the further head wearable device, and/or
- receiving, via the wireless communication, a session confirmation from the further head wearable device.

Additionally or alternatively, in the further head wearable device, the further processor is arranged for establishing the communication session comprising
- receiving, via the wireless communication, the session request from the first head wearable device, and/or
- generating the session confirmation and sending, via the wireless communication, the session confirmation to the first head wearable device.

The features have the following effect. In use, messages are exchanged according to a predefined sequence including the session request and the session confirmation to initiate the communication session. Also, gestures may be detected in the preparation of the session request and confirmation. For example, in a further embodiment of the communication system, in the first head wearable device, the first processor is arranged for generating the session request based on detecting a gesture of the wearer of the first head wearable device, and/or in the further head wearable device, the further processor is arranged for said generating the session confirmation based on detecting a gesture of the wearer of the further head wearable device. Furthermore, or alternatively, in the first head wearable device, the first processor may be arranged for said generating a session request based on detecting a gesture of the wearer of the further head wearable device, and/or
in the further head wearable device, the further processor may be arranged for said generating the session confirmation based on detecting a gesture of the wearer of the first head wearable device.

In an embodiment of the first head wearable device, the first processor is arranged for determining a communication session type based on a gesture of the wearer of the first head wearable device and/or on a gesture of the wearer of the further head wearable device. The features have the following effect. In use, the system may support various types of communication, e.g. depending on the requirements of the user or an application that is active. Advantageously, by detecting a respective gesture of the wearer of the first head wearable device or the further head wearable device, or both, the system may set up a specific communication session, e.g. a voice communication session. In further embodiments, the communication session type may be one of a docking session between the first head wearable device as a host and the further head wearable device as a dockee; a docking session between the first head wearable device as a dockee and the further head wearable device as a host; a voice communication session; a visual information sharing session; a peripheral sharing session.

In an embodiment of the first head wearable device, the first processor is arranged for, in the communication session, providing a user interaction session. In the further head wearable device, the further processor is arranged for, in the communication session, providing the user interaction session. Furthermore, the user interaction session may comprise at least one of voice communication between the wearers of the head wearable devices, information sharing or interactive use of the information between the wearers of the head wearable devices, or sharing of a peripheral or a part of a peripheral. For example, the information may comprise at least one of text; images; video; computer generated data. Also, in noisy environments, "speech to text" based communication may be advantageously used, where the text is rendered on the receiving wearer's smart glass display. The sharing the peripheral may be sharing a computer screen; taking over a display of the further head wearable device by the first head wearable device.

In an embodiment of the first head wearable device, the first processor is arranged for functioning as a dockee in a docking session as the communication session. In the further head wearable device, the further processor is arranged for functioning as a host in the docking session, the host being arranged for coupling to at least one peripheral. The host may be arranged for wireless docking with the head wearable device as a dockee, and for providing access to the peripheral for the head wearable device. The head wearable device may be arranged for wireless docking as the dockee of the host for accessing the peripheral. Advantageously, a docking system has been provided where docking is performed automatically between head wearable devices based on the viewing direction, and possibly further gestures, of the wearer.

Executable code for a method according to the invention is stored on a computer program as defined in independent claim 15.

Further preferred embodiments of the device and method according to the invention are given in the appended claims.

### BRIEF DESCRIPTION OF THE DRAWINGS

These and other aspects of the invention will be apparent from and elucidated further with reference to the embodiments described in the following description and with reference to the accompanying drawings, in which
Figure 1 shows a docking system including a head wearable device,
Figure 2 shows an example of an operating environment having a multiple peripherals and a head wearable device,
Figure 3 shows a method of docking for selecting a peripheral at a dockee,
   and
Figure 4 shows a method of docking at a host.

The figures are purely diagrammatic and not drawn to scale. In the Figures, elements which correspond to elements already described may have the same reference numerals.

### DETAILED DESCRIPTION OF EMBODIMENTS

Wearable computing will offer many new opportunities for companies to enhance the productivity of workers within their professional environments such as knowledge workers in open plan office environments. In particular, head wearable devices such as smart glasses offer the ability to the extend, enhance or replace the functions of tablets, computers and smart phones in collaborative activities for workers in multi-person environments who want to interact with each other in an ad-hoc fashion. In such operating environments various other head wearable devices and/or peripherals may be present. So such an operating environment may have multiple wearers and head wearable devices at the operational distances from each other, i.e. as being worn by users during actual work in the operating environment.

Innovative wearable mobile devices, e.g. smart wearable glasses, have the advantage of being worn by the user rather than carried, and may be operated hands-free by the wearer. Typically head wearable devices have various sensors (e.g. microphones, accelerometers etc.) and actuators (e.g. loudspeaker, display etc.) on board, and usually also a camera. Information extracted from these sensors, especially from the camera capturing an image of an operating environment, may be used to derive information about the position and focus of the wearer, e.g. the viewing direction. Such an image, i.e. an image captured by the camera of the head wearable device while the head wearable device is worn by an actual user in an operating environment is called an environment image.

Typically, the head wearable device and the host device each comprise a microprocessor which executes appropriate software stored at the device; for example, that software may have been downloaded and/or stored in a corresponding memory, e.g., a volatile memory such as RAM or a non-volatile memory such as Flash (not shown). The devices may also be equipped with microprocessors and memories (not shown). Alternatively, the devices may, in whole or in part, be implemented in programmable logic, e.g., as field-programmable gate array (FPGA). Dockee and host devices may be implemented, in whole or in part, as a so-called application-specific integrated circuit (ASIC), i.e. an integrated circuit (IC) customized for their particular use.

Also, the functions and units as described below may be implemented at least partly in hardware circuits, which may include a processor circuit and storage circuit, the processor circuit executing instructions represented electronically in the storage circuits.

Head wearable devices such as smart glasses may establish a form of session-based point-to-point communication. Thereto the head wearable devices must become paired or docked with each other. Typically the process of ad-hoc pairing and unpairing is cumbersome for users within a multi-user environment, as it may require explicit user actions (e.g. NFC pairing or waiting two minutes in the case of push-button pairing) to prevent connecting to the wrong devices. Further, one must be able to digitally identify the person (e.g. via a user management tool) in order to trigger and establish a communication. Selecting a person from a large number of people in a database can be quite cumbersome, in particular if you would not be able to remember the other person's name.

In various practical operating environments the number of times users may need to pair and un-pair is envisioned to be high. One interaction which is becoming of critical concern in open offices often seen in modern buildings is the ability to communicate with an individual co-worker without disturbing others in the space, for example to collaborate and/or share information (e.g. voice, text, sharing images, sharing video, sharing and interacting with computer generated data, sharing a computer screen, taking over another wearer's display). Ambiguity resulting from multi-user/multi-device environments may be resolved by removing the need for any explicit user interaction action with the device for selection and pairing/unpairing. When a head wearable device of the intended other user is selected and identified, communications and interactions may be established between wearers of head wearable devices, which communication session may cater for a range of different communication needs.

In further practical operating environments another problem may occur. Workers may need to interact with each other in a noisy environment (factory, airport runway, construction site) and need to communicate with each other quickly and naturally in a point to point way. This need may be fulfilled by establishing a communication session with a further head wearable device without any explicit user interaction action with the other device for selection and pairing/unpairing.

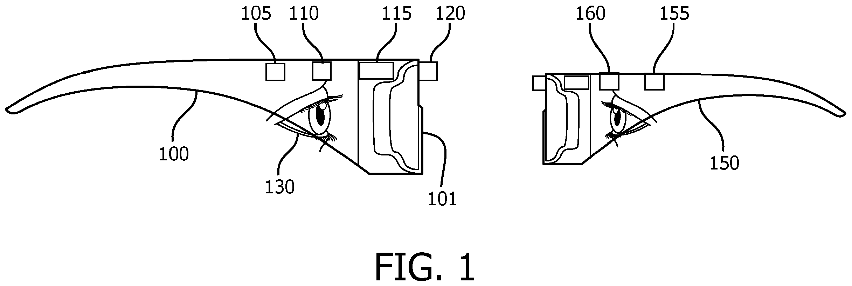

Figure 1 shows a communication system comprising head wearable devices as covered by the claimed invention The communication system comprises two head wearable devices in an operating environment (not shown as such). A first head wearable device 100 is shown as smart glasses. The head wearable device has glasses 101 to be positioned in front of the eyes of a wearer. The glasses may be provided with a head-up display (HUD).

The head wearable device is provided with a camera 120 and may be provided with an eye tracking unit 115 The camera 120 is mounted in a forward looking orientation so as to capture images of the environment substantially coinciding with the field of view of the wearer of the head wearable device. An eye 130 of the wearer is schematically indicated and represents the wearer (not shown further).

The head wearable device has a wireless communication unit 105 and a processor 110 coupled to the other units in the head wearable device for controlling functions of the head wearable device as described in detail later. The processor is arranged for detecting a further head wearable device in the operating environment based on a viewing direction of a wearer and the environment image. Thereto the processor is arranged for acquiring the environment image from the camera and for processing the image.

Optionally, the processor is arranged for detecting a focus position via the camera by taking a center position in the image as indicative of the viewing direction relative to the operating environment. The focus position corresponds to a center position in a field of view of the wearer looking straight ahead due to an eye of the user being in a centered orientation. The processor is further arranged for selecting the head wearable device nearest to the focus position. Such selection assumes that the wearers have eye contact.

Optionally, the processor is arranged for detecting a viewing direction by detecting an actual orientation of an eye of the wearer and determining an offset of the actual orientation from the centered orientation. As such tracking the actual orientation of the eye to determine the viewing direction is known. Subsequently, the focus position is shifted in dependence of the offset. The processor may be arranged for detecting a viewing distance from the eye of the wearer to the other head wearable devices, and shifting said focus position in dependence of the viewing distance. For example the distance may be determined using an auto-focus camera with the ability for the user to adapt the auto focus point by interacting with the camera. Furthermore a distance range may be used to select only those head wearable devices that don't exceed a certain distance from the wearers eye. Alternatively the distance to other head wearable devices may be detected by using e.g. Wi-Fi based distance measurements using e.g. IEEE Fine Time Measurement (FTM).

Subsequently the processor identifies the further head wearable device at the operational distance based on a remotely detectable visual property, the visual property being at least one of coded light as emanating from the further head wearable device and a gesture of the wearer of the further head wearable device.

Additionally, the head wearable devices may be provided with a sufficiently large visual marker, or with some other label graphical symbol or visual code. The processor identifies the further head wearable device based on such visual property being at least one of coded light as emanating from the further head wearable device and a gesture of the wearer of the further head wearable device. When the further head wearable device has been identified the processor is arranged to establish a communication session between the first head wearable device and the further head wearable device.

The head wearable devices may be configured in such a way that the relations between the devices and the visual markers are known. The configuration may be stored for example in a host, e.g. as part of a wireless docking environment data structure, or on a server device in a network to which the head wearable device is connected. The host or network server device may offer a query interface for retrieving the stored configuration information. The host may also offer the stored configuration information during pre-association discovery information exchange with the wireless dockee, using a beacon frame, probe response or GAS frame). Alternatively, the configuration data may be distributed amongst the head wearable devices. The head wearable device may offer a query interface for retrieving stored configuration data or offer this data during pre-association discovery using existing or new Information Elements added to P2P pre-association device discovery or offer this data in GAS query response messages.

In an embodiment of the head wearable which is not covered by the claimed invention, once a visual marker is detected within the image coming from the outward camera of the wearable device, information about or extracted from the marker is used to retrieve information about the detected head wearable device from the earlier stored configuration information. The configuration may be retrieved, for example, by connecting to a host, by sending a query to a server in a network, by parsing pre-association discovery information sent by a wireless docking host using a beacon frame, probe response or GAS frame. The configuration information is then used to determine the head wearable device for initiating the communication session.

The communication system shown in Figure 1 shows a further head wearable device 150 having a further processor 160 and a further wireless communication unit 155. Other components similar to the first head wearable device may also be present, while a further eye represents a further wearer of the further head wearable device. The further processor is arranged to establish the communication session between the first head wearable device and the further head wearable device.

The head wearable devices arranged for wireless communication by having the respective wireless communication units 105, 155 and further elements, e.g. for communicating via WiFi known as such. Setting up a Wi-Fi connection requires a number of steps to be taken and the exchange of a number of messages before the two devices are 'associated' over Wi-Fi. This may require some user involvement to make sure that the correct devices are going to be connected and takes time during which the user has to wait for the connection to be set up and started, in particular the authentication step and establishing the link keys for setting up a secure connection typically requires time and user involvement. One could of course pair all devices in an operating environment with each other beforehand and use those credentials or derived credentials to automatically set up further secure connections (e.g. using persistent P2P groups, using pre-shared keys to derive an encryption/link key), but this may not be very practical in many operating environments.

In an embodiment, a vector based context parameter is automatically derived by triangulating the angle (and/or distance) between the head wearable devices towards a common reference point (such as a Wi-Fi access point with a fixed position known by the head wearable devices, a certain object that is in the field of view of both head wearable devices with a known location such as a lamp or fire alarm) and use this vector based context parameter as a common secret for deriving an encryption/link key. For example, the head wearable device of the requester of the session may use its measured (or known) distance between itself and the reference point, the measured (or known) distance between itself and the other head wearable device, and the angle that the requester's head wearable device has between the reference point and the requested head wearable device to derive the angle the requested device has between the requester's head wearable device and the reference point (e.g. by applying the cosine rule two times to derive the both the distance and angle from the requester's head wearable device towards the reference point). The requested device can simply measure the angle between the requester's head wearable device and the reference, thus both automatically arriving at the same (or very similar) angle that can be used as common secret as input to derive a (set of) applicable link key(s).

Measuring the distance between a head wearable device and a well known object or between two wearable head devices can be done e.g. using IEEE Fine Time Measurement (FTM). The distance may also be derived from retrieving/fetching location information from the other user e.g. a location tracking database (e.g. based on Wi-Fi, GPS or other signals), a location database of users and workplaces, extracting location from coded light from the lamp above the other user's head). The reference point has to be agreed between the two head wearable devices and/or pre-agreed/configured beforehand.

Also the angle between a built-in compass and the magnetic north could in principle be used to derive a shared secret. Assuming two parallel lines between the head wearable devices and the magnetic north, the head wearable device that is the requestor of the session may assume that the angle of the requested head wearable device is 180 degrees minus the angle between the compass pointing of the requestor's head wearable device to the magnetic north whilst the head wearable device is pointing towards the requested head wearable device. Note that the derived angles are not very precise and need to take into account a possible range of values or e.g. a possible average value measured for a certain length of time, in order to take into account the possible fluctuations in magnetic field strength, accuracy of compass and possible magnetic interference.

In an alternative embodiment, which is not covered by the claimed invention, both head wearable devices are equipped with a lamp capable of creating coded light, whereby the coded light is used e.g. to encode a public key, and whereby the camera of the head wearable devices is capable of decoding this public key. The public key can be used in a Diffie-Hellman key exchange to derive a link key. The public key may also be used to verify the digital signature of incoming messages and only accept connection/messages from which can produce the correct digital signature and hence has the corresponding private key.

In an alternative or additional embodiment, which is not covered by the claimed invention, for enhancing the reliability e.g. of pairing using vector based context parameters, pairing the two head wearable devices involves using characteristics of the other user, such as the other user's hair color, other user's clothes color, other user's name, other user's gestures, other user's eye color, etc. as input for creating a link key. When two devices are associated over Wi-Fi, their Wi-Fi connection is protected cryptographically and an IP connection may be established.

Wi-Fi devices can make themselves discoverable wirelessly. This can be done before two devices are associated, so this is called pre-association discovery. There are several types of pre-association discovery. One is pre-association device discovery, whereby a device and some properties of the devices like its name, function, etc. can be discovered. This may be done through beacon frames and probe request frames and probe response frames, well known from IEEE 802.11. Another type is pre-association service discovery, with which the services, e.g. printing, display, etc., offered by a Wi-Fi device can be discovered through IEEE 802.11u Generic Advertisement Service (GAS) frames by others. Such discovery may include information about wireless docking environments being offered for wireless docking. The following elements provide a mechanism to select the wireless device for setting up a wireless communication session.

The first head wearable device 100 has the camera 120 for capturing an environment image of the operating environment, while the first processor 110 is arranged for detecting the further head wearable device 150 in the operating environment based on a viewing direction of a wearer and the environment image. The viewing direction may be used implicitly by selecting a central part of the image, while the camera is directed forward, i.e. in the direction of the head of the wearer when the head wearable device is worn. Now the central part of the image coincides with the point at which the wearer is looking when he is looking forward, i.e. the eyes of the wearer are in a neutral position.

Alternatively, the viewing direction may be actively detected by determining the position of the eyes of the wearer, e.g. by the eye tracking unit 115 known as such. The function of the eye tracking may also be implemented in the processor. In an embodiment, the first head wearable device comprises an inward facing camera for capturing an eye image of an eye of the wearer, and the first processor is arranged for detecting the viewing direction of the wearer based on the eye image. So the processor may be arranged for detecting a viewing direction by detecting an actual orientation of at least one eye of the wearer and determining an offset of the actual orientation from the centered orientation, and shifting the focus position in dependence of the offset. The focus position may correspond to a center position in a field of view of the wearer looking straight ahead due to an eye of the user being in a centered orientation, or may correspond to an off center position due to the eye of the user looking at different direction than where the head wearable device is pointing at. The eye tracking unit may have an inwards facing camera pointed at the eyes of the user. Hence the viewing direction is actively detected.

Using the actual viewing direction a part of the environment image is selected at which the wearer appears to be looking. Advantageously, the focus position is augmented based on the actual viewing direction of the wearer, and the head wearable device is selected based on the augmented focus position in the image.

During establishing the communication session various commands, requests or confirmations may be issued based on user interaction with the head wearable device or a connected device, such as pressing a button on the head wearable device or using some other user interface element like a touch screen on a connected watch or mobile phone. However, gestures may be used in addition to, or as an alternative to, such a user interface.

In an embodiment of the communication system a smart glass wearer establishes a communication session with another wearer by a combination of direct eye contact to the other wearer and a gesture. For example, the first wearer may indicate that a communication session with the other wearer is intended by a combination of direct eye contact to the other wearer and a gesture. The other wearer may indicate an intention to communicate, and/or confirm his willingness to start a communication session. The gesture may be a hand gesture or any other suitable movement of a body part. Gesture recognition based on images of a person is known as such. The gesture may also indicate a type of communication, a duration of communication, a data type or application that is subject of the communication, or any other element that defines the communication session. Various embodiments are described now.

In an embodiment of the above communication system, in the first head wearable device the first processor is arranged for establishing the communication session based on detecting a session confirmation by detecting a gesture of the wearer of the further head wearable device. Alternatively, or additionally, in the further head wearable device, the further processor is arranged for establishing the communication session comprising detecting a session request by detecting a gesture of the wearer of the first head wearable device.

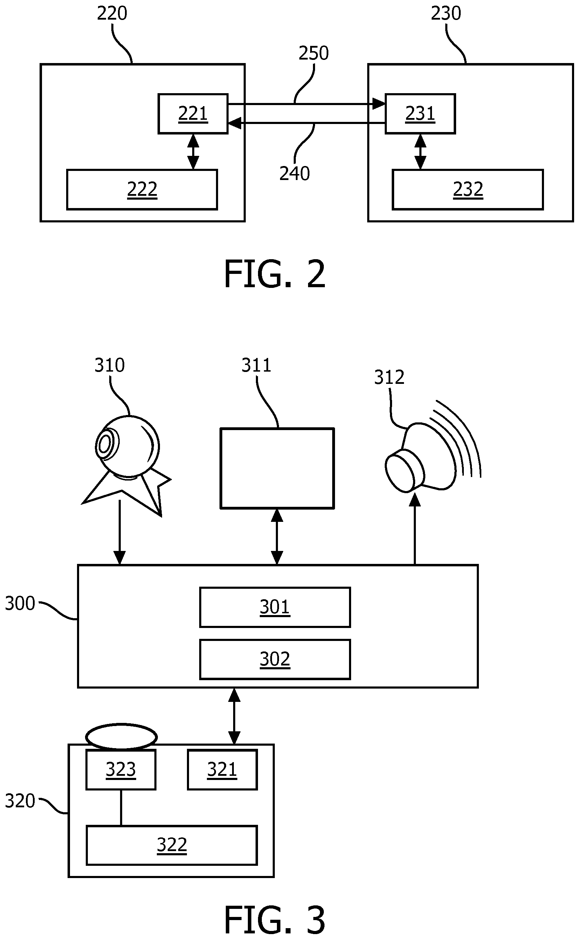

Figure 2 shows establishing a communication session in a communication system covered by the claimed invention.

The communication system comprises two head wearable devices in an operating environment (schematically shown). The first head wearable device 220 has a first communication unit 221 and a first processor 222. The further head wearable device 230 has a further communication unit 231 and a further processor 232. The head wearable devices are configured as described above for visually detecting and identifying each other in an operating environment. Subsequently the communication session may be established in one of the following ways.

In the first head wearable device the first processor 222 may be arranged for establishing the communication session by generating a session request 250 and sending, via the wireless communication, the session request to the further head wearable device. Alternatively, or additionally the first processor may be arranged for receiving, via the wireless communication, a session confirmation 240 from the further head wearable device. Also, in the further head wearable device the further processor may be arranged for establishing the communication session by receiving, via the wireless communication, the session request 250 from the first head wearable device. Alternatively, or additionally the further processor may be arranged for generating the session confirmation 240 and sending, via the wireless communication, the session confirmation to the first head wearable device.

Optionally a combination of gestures and electronic, wireless messages may be used to initiate and/or confirm setting up, defining, modifying or terminating the communication session.

In an embodiment of the communication system, in the first head wearable device the first processor is arranged for generating a session request based on detecting a gesture of the wearer of the first head wearable device. For example, the processor may detect an inviting gesture of the wearer, e.g. pointing his finger, in the direction of a further head wearable device. Also, the head wearable device could emit a light or flash that is triggered by this gesture to attract attention for communication with another wearer. The processor then identifies the head wearable device that is pointed to, e.g. by detecting coded light emanating from that head wearable device. Then a session request is generated targeted at that head wearable device.

Alternatively, or additionally, in the further head wearable device, the further processor is arranged for generating a session confirmation based on detecting a gesture of the wearer of the further head wearable device. For example, the processor may detect a positive gesture of the wearer such as a "thumps up" in the direction of a first head wearable device. The processor may then identify the head wearable device that is indicated to, e.g. by detecting coded light emanating from that head wearable device. Alternatively the processor may already have received a session request, and respond thereto. Then a session response is generated targeted at the first head wearable device.

In an embodiment of the communication system, in the first head wearable device, the first processor is arranged for generating a session request based on detecting a gesture of the wearer of the further head wearable device. For example, the processor may detect an inviting gesture of the further wearer in the direction of the first head wearable device. The processor then identifies the further head wearable device of which the wearer makes the invitation gesture, e.g. by detecting coded light emanating from the further head wearable device. Then a session request is generated targeted at the further head wearable device. Also, a meeting gesture could be identified for invitation of more than one person, i.e. initiation of a communication session with three or more wearers who may separately acknowledge to an invitation.

Alternatively, or additionally, in the further head wearable device, the further processor is arranged for generating a session confirmation based on detecting a gesture of the wearer of the first head wearable device. For example, the processor may detect a confirmative gesture of the first wearer, e.g. pointing his finger in the direction of a further head wearable device. The processor then identifies the first head wearable device, e.g. by detecting a visual marker on the first head wearable device. Then a session confirmation is generated targeted at that head wearable device.

In an embodiment of the communication system, in the first head wearable device the first processor is arranged for determining a communication session type. For example, the communication session type is a voice communication session, or a visual information sharing session, or a peripheral sharing session.

In an embodiment, the communication session type is a docking session between the first head wearable device as a host and the further head wearable device as a dockee, or a docking session between the first head wearable device as a dockee and the further head wearable device as a host. In wireless docking, a so called wireless docking host makes a number of services available to a mobile device called dockee, with which the dockee can set up communication in one go. Any group of peripheral devices and/or services made available by a wireless docking host may be called a wireless docking environment.

Figure 3 shows a communication system covered by the claimed invention arranged for docking a dockee to a host. The Figure shows a docking system including a head wearable device 320 as a dockee. The system includes a host device 300 for wireless communication with one or more dockees 320. The host may be embedded in a further head wearable device, or the host device may be coupled to the further head wearable device. The host is coupled to a number of peripherals 310,311,312 to provide services, e.g. rendering audio or video (AV) data. It is noted that in this document AV data is used for any type of video data, audio data or a combination of video and audio data. The peripherals may include video output devices like a beamer or a display 311, graphical input/output devices like a camera 310 or a touch screen, audio output devices like a loudspeaker system 312 or a headphone, user input devices like a mouse or a room control unit; data processing devices like a data storage unit or a printer. In a practical environment there may be multiple hosts, which are coupled to further peripherals.

The host device 300 has a host communication unit 302 for accommodating wireless communication, for example a Wi-Fi unit, well known as such. The host device further has a host processor 301 arranged for docking at least one dockee. The process of docking a wireless device to a wireless docking host (WDH) is a process of establishing a data link via the available radio channel such as Wi-Fi or Bluetooth, and is known as such as discussed above with reference to WO 2012/117306A1. A description of Bluetooth can be found, for example, in Bluetooth Specification, Core Package version 2.1 + EDR, issued: 26 July 2007. The docking process involves providing access to one or more peripherals for the dockee. The host may have a dedicated peripheral control unit for controlling the configuration and services available via the peripherals.

The dockee 320 has a dockee communication unit 321 for accommodating said wireless communication with the host. In practice, there may be multiple communication units for that purpose, for example Bluetooth ,Wi-Fi and 60GHz (e.g. WiGig). The dockee further has a dockee processor 322 arranged for docking with the host device for, as a dockee, getting access to the at least one service.

A camera 323 on the head wearable device is arranged for capturing an image of the operating environment, when the wearer is looking in the direction of the further head wearable device representing the host. The processor 322 is arranged for detecting a viewing direction of a wearer relative to the operating environment. As the orientation of the head wearable device and its camera are known during actually wearing the head wearable device, the processor may assume that the wearer is focused on a focus point near the center of the captured image. Further embodiments of determining the viewing direction and focus point have been discussed above.

The processor 322 further implements a set of communication functions as discussed above with reference to the first processor shown in Figures 1 and 2. Thereby a communication session that enables docking, i.e. a docking type communication session, is established between the head wearable devices based on eye contact as discussed above. The devices may employ Wi-Fi communication to make their wireless docking environment or their function wirelessly available, e.g. by using Wi-Fi Direct. When two devices are associated over Wi-Fi, their Wi-Fi connection is protected cryptographically and an IP connection is established.

In an embodiment of the communication system, in the first head wearable device the first processor is arranged for determining a communication session type based on a gesture of the wearer of the first head wearable device and/or on a gesture of the wearer of the further head wearable device. For example, the processor may detect a type gesture of the first wearer, e.g. a payment move in the direction of a further head wearable device. The processor then identifies the further head wearable device, e.g. by detecting a visual marker on the further head wearable device. Then a session is established and a type of the session is defined based on the gesture. For example, an application is started that enables making or paying a bill.

In practice the gesture may indicate whether a user wants to communicate and may further indicate a type of sharing the user would like to establish, e.g. voice communication. When the smart glass detects a hand waving gesture to attract the attention of another, the outward facing camera may be used to determine if another smart glass lies within the field of view of the camera. Once another wearer's smart glass is detected, the initiator awaits the wearer's response. For example, the receiving wearer may shake her head to decline the request, or may nod to acknowledge a session. Alternatively prolonged eye-contact, e.g. based on a timeout, is detected between both glasses to trigger the initiation. The eye contact is picked up by the initiator's smart glass and the pairing request/response protocol is initiated, e.g. Wi-Fi Protected Setup, Bluetooth pairing. For privacy and security, the pairing process can include the exchange of a shared secret, e.g. an automatically determined shared context parameter. For example, such a parameter may be based on angle calculation compared to the earth's magnetic north pole using a built in compass. For example the angle between the north pole and the connecting line between the connected head wearable devices, or the eye contact line, may be determined independently at both head wearable devices. The gestures that are selected to be detected are the most natural forms of interaction to establish a session. However, alternatives means of acknowledging, such as blinking may also be detected. Hence the communication session is initiated based on the eye contact and results in the head wearable devices being paired, while gestures may be detected during the process and/or to further define the type of communication.

Once paired, in-session communications take place which may depend on the initiator's original gesture. For example, in the case of voice communications, the default operation may be to work in "quiet mode". This means that the wearers can sub-vocalize or whisper to each other without disturbing workers who are not participating in the session.

Once initiated, the session remains active for the duration that the eye contact or voice communication exists between the paired wearers. Thereto the first processor and the further processor may monitor the eye contact, gestures or communication activity. For example, the first processor might control the camera to periodically take subsequent environmental images, which may be used to detect or track the location of the further head wearable device using the viewing direction of the wearer.

In an embodiment, which is not covered by the claimed invention, un-pairing is triggered based on a time-out of non-eye contact, or if silence is being detected for a period on a voice communication link. Here there is no need to explicitly end a session by a user command. Alternatively, or additionally, the user is provided with a user interface to issue command to control the communication session. For example a user may wish to change the session once paired, or may want to add additional glass wearers to the session.

In an embodiment the first processor is arranged for executing in-session interactions, which may include but are not limited to:
- specific voice communication types, e.g. with support for quiet environments such as an office where the users can whisper, or noisy environments where noise cancellation is activated;
- exchanging documents and digital media;
- screen sharing using multiple displays;
- enabling the other user to see what the other person is seeing to get the other person's view of the situation (e.g. in operating room of hospital)

For example, a user points at his laptop screen with his finger and says "what do you think about this?". The head wearable device detects the digital object being pointed at and relays it's digital form to the other recipient.

The point-to-point communication may be established using Wi-Fi, Wi-Fi Direct, Bluetooth or other wireless technologies. Once a point-to-point wireless connection is established, such as Wi-Fi Direct, the same wireless connection can be used to establish communication between other devices and services that are linked to the wearer's head wearable device. For example, the linked smartphones/tablet/laptops may establish a Wi-Fi Direct Services Send service session for file exchange, a Miracast session for display sharing, a Wi-Fi Serial Bus or Wi-Fi Docking session to be able to use each other's peripherals, etc.

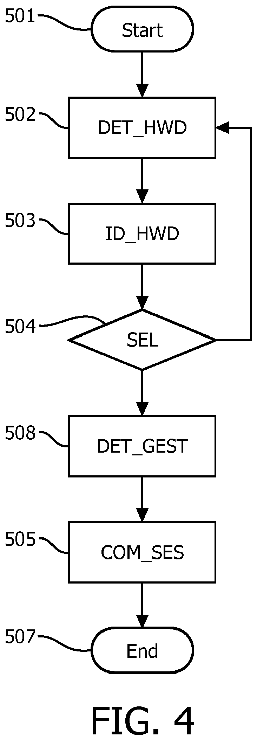

Figure 4 shows a method of communicating for use in a head wearable device, which is covered by the claimed invention. The method enables a communication session between head wearable devices. Functioning of a first head wearable device and a further head wearable device have been elucidated with reference to Figures 1, 2 and 3. The method initially starts at START 501 and is triggered by the user placing the head wearable device on his/her head. The camera is activated for capturing environment images. Next, at DET_HWD 502, a further head wearable device is detected in the operating environment based on a viewing direction of a wearer of the head wearable device and the environment image. Next, at stage ID HWD 503, the further head wearable device is identified, e.g. based on a visual property being at least one of coded light as emanating from the further head wearable device and a gesture of the wearer of the further head wearable device. Next the head wearable device is selected at stage SEL 504 if the detection and identification are successful. If not, the method continues at the first stage DET HWD. Optionally the method performs gesture detection stage DET_GEST 508. In this stage a session confirmation is detected by detecting a gesture of the wearer of the further head wearable device, and/or a session request is detected by detecting a gesture of the wearer of the first head wearable device. Next, the method continues at the communication stage COM_SES 505 by establishing a communication session between the head wearable device and the further head wearable device.

In practice the method may be implemented in software (head wearable device method), e.g. a so-called app. Such computer program products are for wireless communication, and comprise a program operative to cause a processor to perform the head wearable device method as described with reference to Figure 4. Further embodiments of the method comprise further instructions to execute the further operations as described with reference to Figures 1-3. So the various embodiments of the invention may be implemented in hardware and/or software using programmable components.

It will be appreciated that the above description for clarity has described embodiments of the invention with reference to different functional units and processors. However, it will be apparent that any suitable distribution of functionality between different functional units or processors may be used without deviating from the invention. For example, functionality illustrated to be performed by separate units, processors or controllers may be performed by the same processor or controllers. Hence, references to specific functional units are only to be seen as references to suitable means for providing the described functionality rather than indicative of a strict logical or physical structure or organization. The invention may be implemented in any suitable form including hardware, software, firmware or any combination of these.

It is noted, that in this document the word 'comprising' does not exclude the presence of other elements or steps than those listed and the word 'a' or 'an' preceding an element does not exclude the presence of a plurality of such elements, that any reference signs do not limit the scope of the claims, that the invention may be implemented by means of both hardware and software, and that several 'means' or 'units' may be represented by the same item of hardware or software, and a processor may fulfill the function of one or more units, possibly in cooperation with hardware elements.

## Claims

1. A first head wearable device (100) for use in an operating environment comprising:
a wireless communication unit (105) for wireless communication,
a camera (120) for capturing an environment image of the operating environment while the first head wearable device is worn by a first wearer, and
a first processor (110) arranged for:
processing the environment image for detecting a further head wearable device (150), which is worn by a further wearer in the operating environment at an operational distance from the first wearer, based on a viewing direction of the first wearer,
identifying the further head wearable device at the operational distance based on a remotely detectable visual property, the visual property being at least one of coded light as emanating from the further head wearable device and a gesture of the wearer of the further head wearable device, and
establishing a communication session between the first head wearable device and the identified further head wearable device.

2. Communication system comprising head wearable devices for use in an operating environment, the head wearable devices being arranged for wireless communication, the communication system comprising:
the first head wearable device (100) of claim 1 and a further head wearable device comprising
- a further processor (160) arranged for
- establishing the communication session between the first head wearable device and the further head wearable device.

3. Communication system as claimed in claim 2 , wherein, the head wearable devices are arranged for establishing a secure communication session by deriving a vector based context parameter by at least one of
- triangulating an angle and
- a distance between the head wearable devices towards a common reference point, and using the vector based context parameter as a common secret for deriving an encryption key,
or,
- in the first head wearable device, the first processor (110) is arranged for establishing the communication session comprising detecting a session confirmation by detecting the gesture of the further wearer,
or,
- in the further head wearable device, the further processor (160) is arranged for establishing the communication session comprising detecting a session request by detecting a gesture of the first wearer.

4. Communication system as claimed in claim 2 or 3, wherein the first head wearable device comprises
- an inward facing camera (115) for capturing an eye image of an eye of the first wearer, and the first processor is arranged for
- detecting the viewing direction of the first wearer based on the eye image.

5. Communication system as claimed in any of claims 2-4, wherein, in the first head wearable device, the first processor (110) is arranged for said identifying the further head wearable device based on the remotely detectable visual property further being at least one of
- a visual mark as provided on the further head wearable device;
- a visual property of the further head wearable device;
- a visual property of the wearer of the further head wearable device.

6. Communication system as claimed in any of claims 2-5, wherein, in the first head wearable device, the first processor (110) is arranged for establishing the communication session comprising at least one of
- generating a session request and sending, via the wireless communication, the session request to the further head wearable device, and
- receiving, via the wireless communication, a session confirmation from the further head wearable device, and, in the further head wearable device, the further processor (160) is arranged for establishing the communication session comprising at least one of
- receiving, via the wireless communication, the session request from the first head wearable device, and
- generating the session confirmation and sending, via the wireless communication, the session confirmation to the first head wearable device.

7. Communication system as claimed in claim any of claims 2-6, wherein, in the first head wearable device, the first processor (110) is arranged for generating a session request based on detecting a gesture of the wearer of the first head wearable device, or in the further head wearable device, the further processor (160) is arranged for generating a session confirmation based on detecting a gesture of the wearer of the further head wearable device.

8. Communication system as claimed in any of claims 2-7 , wherein in the first head wearable device, the first processor (110) is arranged for generating a session request based on detecting the gesture of the wearer of the further head wearable device, or in the further head wearable device, the further processor (160) is arranged for generating a session confirmation based on detecting a gesture of the wearer of the first head wearable device.

9. Communication system as claimed in any of claims 2-8, wherein, in the first head wearable device, the first processor (110) is arranged for determining a communication session type and the communication session type is one of
- a docking session between the first head wearable device as a host and the further head wearable device as a dockee;
- a docking session between the first head wearable device as a dockee and the further head wearable device as a host;
- a voice communication session;
- a visual information sharing session;
- a peripheral sharing session.

10. Communication system as claimed in any of claims 2-9, wherein
- in the first head wearable device, the first processor (110) is arranged for determining a communication session type based on a gesture of the wearer of the first head wearable device or on the gesture of the wearer of the further head wearable device.

11. Communication system as claimed in any of claims 2-10, wherein
- in the first head wearable device, the first processor (110) is arranged for, in the communication session, providing a user interaction session , and
- in the further head wearable device, the further processor (160) is arranged for, in the communication session, providing the user interaction session,
the user interaction session comprising at least one of
- voice communication between the wearers of the head wearable devices,
- information sharing or interactive use of the information between the wearers of the head wearable devices, the information comprising at least one of
- text;
- images;
- video;
- computer generated data;
- sharing of a peripheral or a part of a peripheral such as
- sharing a computer screen;
- taking over a display of the further head wearable device by the first head wearable device.

12. Communication system as claimed in any of claims 2-11, wherein
- in the first head wearable device, the first processor (322) is arranged for functioning as a dockee (320) in a docking session as the communication session, and
- in the further head wearable device, the further processor (301) is arranged for functioning as a host (300) in the docking session, the host being arranged for coupling to at least one peripheral (310,311,312), the host being arranged for wireless docking with the first head wearable device as a dockee, and for providing access to the peripheral for the first head wearable device, the first head wearable device arranged for wireless docking as the dockee of the host for accessing the peripheral.

13. Method of communicating for use by the first head wearable device as claimed in claim 1, the first head wearable device (100) being arranged for wireless communication and comprising a camera (120) for capturing an environment image of an operating environment while the first head wearable device is worn by a first wearer, the method comprising the following steps performed by the first head wearable device (100):
- processing the environment image for detecting a further head wearable device, which is worn by a further wearer in the operating environment at an operational distance from the first wearer, based on a viewing direction of the first wearer,
- identifying the further head wearable device at the operational distance based on a remotely detectable visual property, the visual property being at least one of coded light as emanating from the further head wearable device and a gesture of the wearer of the further head wearable device, and
- establishing a communication session between the first head wearable device and the further head wearable device.

14. Method as claimed in claim 13, comprising at least one of
- establishing a secure communication session by deriving a vector based context parameter by triangulating an angle or a distance between the head wearable devices towards a common reference point and using the vector based context parameter as a common secret for deriving an encryption key,
- detecting a session confirmation by detecting the gesture of the wearer of the further head wearable device,
and
- detecting a session request by detecting a gesture of the wearer of the first head wearable device.

15. Computer program comprising code instructions to cause the first head wearable device of claim 1 to execute the method of claims 13 or 14.

## Patentansprüche

1. Erste kopftragbare Vorrichtung (100) zur Verwendung in einer Betriebsumgebung, umfassend:
eine drahtlose Kommunikationseinheit (105) zur drahtlosen Kommunikation,
eine Kamera (120) zum Erfassen eines Umgebungsbildes der Betriebsumgebung, während die erste kopftragbare Vorrichtung von einem ersten Träger getragen wird, und
einen ersten Prozessor (110), der angeordnet ist, für:
Verarbeiten des Umgebungsbildes zum Erfassen einer weiteren kopftragbaren Vorrichtung (150), die von einem weiteren Träger in der Betriebsumgebung in einem Betriebsabstand vom ersten Träger getragen wird, basierend auf einer Blickrichtung des ersten Trägers, Identifizieren der weiteren kopftragbaren Vorrichtung in dem Betriebsabstand basierend auf einer fernerkennbaren visuellen Eigenschaft, wobei die visuelle Eigenschaft mindestens eine von codiertem Licht ist, das von der weiteren kopftragbaren Vorrichtung ausgeht, und einer Geste des Trägers der weiteren kopftragbaren Vorrichtung, und
Einrichten einer Kommunikationssitzung zwischen der ersten kopftragbaren Vorrichtung und der identifizierten weiteren kopftragbaren Vorrichtung.

2. Kommunikationssystem, das kopftragbare Vorrichtungen zur Verwendung in einer Betriebsumgebung umfasst, wobei die kopftragbaren Vorrichtungen zur drahtlosen Kommunikation angeordnet sind, wobei das Kommunikationssystem umfasst:
die erste kopftragbare Vorrichtung (100) nach Anspruch 1 und
eine weitere kopftragbare Vorrichtung umfassend
- einen weiteren Prozessor (160), der angeordnet ist, zum
- Einrichten der Kommunikationssitzung zwischen der ersten kopftragbaren Vorrichtung und der weiteren kopftragbaren Vorrichtung.

3. Kommunikationssystem nach Anspruch 2, wobei die kopftragbaren Vorrichtungen angeordnet sind, um eine sichere Kommunikationssitzung einzurichten, durch Ableiten eines vektorbasierten Kontextparameters durch mindestens einen von
- Triangulieren eines Winkels und
- ein Abstand zwischen den kopftragbaren Vorrichtungen zu einem gemeinsamen Referenzpunkt,
und Verwenden des vektorbasierten Kontextparameters als gemeinsames Geheimnis zum Ableiten eines Verschlüsselungsschlüssels,
oder,
- in der ersten kopftragbaren Vorrichtung ist der erste Prozessor (110) zum Einrichten der Kommunikationssitzung angeordnet, die das Erfassen einer Sitzungsbestätigung durch Erfassen der Geste des weiteren Trägers umfasst,
oder,
- in der weiteren kopftragbaren Vorrichtung ist der weitere Prozessor (160) zum Einrichten der Kommunikationssitzung angeordnet, die das Erfassen einer Sitzungsanforderung durch Erfassen einer Geste des ersten Trägers umfasst.

4. Kommunikationssystem nach Anspruch 2 oder 3, wobei die erste kopftragbare Vorrichtung umfasst
- eine nach innen gerichtete Kamera (115) zum Erfassen eines Augenbildes eines Auges des ersten Trägers, und der erste Prozessor angeordnet ist, zum
- Erkennen der Blickrichtung des ersten Trägers anhand des Augenbildes.

5. Kommunikationssystem nach einem der Ansprüche 2 bis 4, wobei in der ersten kopftragbaren Vorrichtung der erste Prozessor (110) angeordnet ist, um die weitere kopftragbare Vorrichtung zu identifizieren, basierend auf der fernerkennbaren visuellen Eigenschaft, die ferner mindestens eine ist von
- eine visuelle Markierung, wie sie auf der weiteren kopftragbaren Vorrichtung vorgesehen ist;
- eine visuelle Eigenschaft der weiteren kopftragbaren Vorrichtung;
- eine visuelle Eigenschaft des Trägers der weiteren kopftragbaren Vorrichtung.

6. Kommunikationssystem nach einem der Ansprüche 2 bis 5, wobei in der ersten kopftragbaren Vorrichtung der erste Prozessor (110) zum Einrichten der Kommunikationssitzung angeordnet ist, die mindestens eines der Folgenden umfasst
- Erzeugen einer Sitzungsanforderung und Senden der Sitzungsanforderung über die drahtlose Kommunikation an die weitere kopftragbare Vorrichtung und
- Empfangen einer Sitzungsbestätigung von der weiteren kopftragbaren Vorrichtung über die drahtlose Kommunikation,
und in der weiteren kopftragbaren Vorrichtung ist der weitere Prozessor (160) zum Einrichten der Kommunikationssitzung angeordnet, die mindestens eines der Folgenden umfasst
- Empfangen der Sitzungsanforderung von der ersten kopftragbaren Vorrichtung über die drahtlose Kommunikation, und
- Erzeugen der Sitzungsbestätigung und Senden der Sitzungsbestätigung über die drahtlose Kommunikation an die erste kopftragbare Vorrichtung.

7. Kommunikationssystem nach einem der Ansprüche 2 bis 6, wobei
in der ersten kopftragbaren Vorrichtung der erste Prozessor (110) zum Erzeugen einer Sitzungsanforderung angeordnet ist, die auf dem Erfassen einer Geste des Trägers der ersten kopftragbaren Vorrichtung basiert,
oder
in der weiteren kopftragbaren Vorrichtung der weitere Prozessor (160) angeordnet ist, um eine Sitzungsbestätigung basierend auf dem Erfassen einer Geste des Trägers der weiteren kopftragbaren Vorrichtung zu erzeugen.

8. Kommunikationssystem nach einem der Ansprüche 2 bis 7, wobei
in der ersten kopftragbaren Vorrichtung der erste Prozessor (110) zum Erzeugen einer Sitzungsanforderung angeordnet ist, die auf dem Erfassen der Geste des Trägers der weiteren kopftragbaren Vorrichtung basiert, oder in der weiteren kopftragbaren Vorrichtung der weitere Prozessor (160) zum Erzeugen einer Sitzungsbestätigung angeordnet ist, die auf dem Erfassen einer Geste des Trägers der ersten kopftragbaren Vorrichtung basiert.

9. Kommunikationssystem nach einem der Ansprüche 2 bis 8, wobei in der ersten kopftragbaren Vorrichtung der erste Prozessor (110) zum Bestimmen eines Kommunikationssitzungstyps angeordnet ist und der Kommunikationssitzungstyp eines der Folgenden ist
- eine Docking-Sitzung zwischen der ersten kopftragbaren Vorrichtung als Host und der weiteren kopftragbaren Vorrichtung als Dockee;
- eine Docking-Sitzung zwischen der ersten kopftragbaren Vorrichtung als Dockee und der weiteren kopftragbaren Vorrichtung als Host;
- eine Sprachkommunikationssitzung;
- eine visuelle Sitzung zur gemeinsamen Verwendung von Informationen;
- eine periphere Sitzung zur gemeinsamen Verwendung.

10. Kommunikationssystem nach einem der Ansprüche 2 bis 9, wobei
- in der ersten kopftragbaren Vorrichtung der erste Prozessor (110) angeordnet ist, um einen Kommunikationssitzungstyps basierend auf einer Geste des Trägers der ersten kopftragbaren Vorrichtung oder auf der Geste des Trägers der weiteren kopftragbaren Vorrichtung zu bestimmen.

11. Kommunikationssystem nach einem der Ansprüche 2 bis 10, wobei
- in der ersten kopftragbaren Vorrichtung der erste Prozessor (110) vorgesehen ist, um in der Kommunikationssitzung eine Benutzerinteraktionssitzung bereitzustellen, und
- in der weiteren kopftragbaren Vorrichtung der weitere Prozessor (160) vorgesehen ist, um in der Kommunikationssitzung die Benutzerinteraktionssitzung bereitzustellen, wobei die Benutzerinteraktionssitzung mindestens eines der Folgenden umfasst
- Sprachkommunikation zwischen den Trägern der kopftragbaren Vorrichtungen,
- gemeinsame Nutzung von Informationen oder interaktive Nutzung der Informationen zwischen den Trägern der kopftragbaren Vorrichtungen, wobei die Informationen mindestens eines der Folgenden umfassen
- Text;
- Bilder;
- Video;
- computergenerierte Daten;
- gemeinsame Nutzung eines Peripheriegeräts oder eines Teils eines Peripheriegeräts wie
- gemeinsame Nutzung eines Computerbildschirms;
- Übernahme einer Anzeige der weiteren kopftragbaren Vorrichtung durch die erste kopftragbare Vorrichtung.

12. Kommunikationssystem nach einem der Ansprüche 2 bis 11, wobei
- in der ersten kopftragbaren Vorrichtung der erste Prozessor (322) angeordnet ist, um als Dockee (320) in einer Docking-Sitzung als Kommunikationssitzung zu fungieren, und
- in der weiteren kopftragbaren Vorrichtung der weitere Prozessor (301) angeordnet ist, um als Host (300) in der Docking-Sitzung zu fungieren, wobei der Host zur Kopplung an mindestens ein Peripheriegerät (310, 311, 312) angeordnet ist,
wobei der Host zum drahtlosen Andocken mit der ersten kopftragbaren Vorrichtung als Dockee angeordnet ist,
und
zum Bereitstellen des Zugriffs zum Peripheriegerät für die erste kopftragbare Vorrichtung,
wobei die erste kopftragbare Vorrichtung zum drahtlosen Andocken als Dockee des Hosts zum Zugreifen auf das Peripheriegerät angeordnet ist.

13. Kommunikationsverfahren zur Verwendung durch die erste kopftragbare Vorrichtung nach Anspruch 1, wobei die erste kopftragbare Vorrichtung (100) für die drahtlose Kommunikation angeordnet ist und eine Kamera (120) zum Erfassen eines Umgebungsbildes einer Betriebsumgebung umfasst, während die erste kopftragbare Vorrichtung von einem ersten Träger getragen wird, wobei das Verfahren die folgenden Schritte umfasst, die von der ersten kopftragbaren Vorrichtung (100) ausgeführt werden:
- Verarbeiten des Umgebungsbildes zum Erkennen einer weiteren kopftragbaren Vorrichtung, die von einem weiteren Träger in der Betriebsumgebung in einem Betriebsabstand von dem ersten Träger getragen wird, basierend auf einer Blickrichtung des ersten Trägers,
- Identifizieren der weiteren kopftragbaren Vorrichtung in der Betriebsabstand basierend auf einer fernerkennbaren visuellen Eigenschaft, wobei die visuelle Eigenschaft mindestens eine von codiertem Licht ist, das von der weiteren kopftragbaren Vorrichtung ausgeht, und einer Geste des Trägers der weiteren kopftragbaren Vorrichtung, und
- Einrichtung einer Kommunikationssitzung zwischen der ersten kopftragbaren Vorrichtung und der weiteren kopftragbaren Vorrichtung.

14. Verfahren nach Anspruch 13, umfassend mindestens eines der Folgenden
- Einrichten einer sicheren Kommunikationssitzung durch Ableiten eines vektorbasierten Kontextparameters durch Triangulieren eines Winkels oder eines Abstands zwischen den kopftragbaren Vorrichtungen zu einem gemeinsamen Referenzpunkt und Verwenden des vektorbasierten Kontextparameters als gemeinsames Geheimnis zum Ableiten eines Verschlüsselungsschlüssels,
- Erkennen einer Sitzungsbestätigung durch Erkennen der Geste des Trägers der weiteren kopftragbaren Vorrichtung, und
- Erkennen einer Sitzungsanforderung durch Erkennen einer Geste des Trägers der ersten kopftragbaren Vorrichtung.

15. Computerprogramm, das Codeanweisungen umfasst, um zu bewirken, dass die erste kopftragbare Vorrichtung nach Anspruch 1 das Verfahren nach Anspruch 13 oder 14 ausführt.

## Revendications

1. Premier dispositif portable de tête (100) à utiliser dans un environnement opérationnel comprenant:
une unité de communication sans fil (105) pour une communication sans fil,
une caméra (120) pour capturer une image d'environnement de l'environnement opérationnel pendant que le premier dispositif portable de tête est porté par un premier porteur, et
un premier processeur (110) agencé pour:
traiter l'image d'environnement pour détecter un autre dispositif portable de tête (150), qui est porté par un autre porteur dans l'environnement opérationnel à une distance opérationnelle du premier porteur, sur la base d'une direction d'observation du premier porteur, identifier l'autre dispositif portable de tête à la distance opérationnelle sur la base d'une propriété visuelle détectable à distance, la propriété visuelle étant au moins l'une entre la lumière codée comme émanant de l'autre dispositif portable de tête et un geste du porteur de l'autre dispositif portable de tête, et
établir une session de communication entre le premier dispositif portable de tête et l'autre dispositif portable de tête identifié.

2. Système de communication comprenant des dispositifs portables de tête à utiliser dans un environnement opérationnel, les dispositifs portables de tête étant agencés pour une communication sans fil, le système de communication comprenant:
le premier dispositif portable de tête (100) selon la revendication 1 et
un autre dispositif portable de tête comprenant
- un autre processeur (160) agencé pour
- établir la session de communication entre le premier dispositif portable de tête et l'autre dispositif portable de tête.

3. Système de communication selon la revendication 2, dans lequel, les dispositifs portables de tête sont agencés pour établir une session de communication sécurisée en dérivant un paramètre de contexte basé sur un vecteur par au moins l'une parmi
- une triangulation d'un angle et
- une distance entre les dispositifs portables de tête vers un point de référence commun,
et une utilisation du paramètre de contexte basé sur un vecteur comme secret commun pour dériver une clé de cryptage,
ou,
- dans le premier dispositif portable de tête, le premier processeur (110) est agencé pour établir la session de communication comprenant la détection d'une confirmation de session en détectant le geste de l'autre porteur,
ou,
- dans l'autre dispositif portable de tête, l'autre processeur (160) est agencé pour établir la session de communication comprenant la détection d'une demande de session en détectant un geste du premier porteur.

4. Système de communication selon la revendication 2 ou 3, dans lequel le premier dispositif portable de tête comprend
- une caméra orientée vers l'intérieur (115) pour capturer une image oculaire d'un œil du premier porteur, et le premier processeur est agencé pour
- détecter la direction d'observation du premier porteur sur la base de l'image de l'œil.

5. Système de communication selon l'une quelconque des revendications 2 à 4, dans lequel, dans le premier dispositif portable de tête, le premier processeur (110) est agencé pour ladite identification de l'autre dispositif portable de tête sur la base de la propriété visuelle détectable à distance étant en outre au moins l'une parmi
- une marque visuelle telle que prévue sur l'autre dispositif portable de tête;
- une propriété visuelle de l'autre dispositif portable de tête;
- une propriété visuelle du porteur de l'autre dispositif portable de tête.

6. Système de communication selon l'une quelconque des revendications 2 à 5, dans lequel, dans le premier dispositif portable de tête, le premier processeur (110) est agencé pour établir la session de communication comprenant au moins l'un parmi
- la génération d'une demande de session et l'envoi, via la communication sans fil, de la demande de session à l'autre dispositif portable de tête, et
- la réception, via la communication sans fil, d'une confirmation de session de l'autre dispositif portable de tête,
et, dans l'autre dispositif portable de tête, l'autre processeur (160) est agencé pour établir la session de communication comprenant au moins l'un parmi
- la reception, via la communication sans fil, de la demande de session du premier dispositif portable de tête, et
- la génération de la confirmation de session et l'envoi, via la communication sans fil, de la confirmation de session au premier dispositif portable de tête.

7. Système de communication selon l'une quelconque des revendications 2 à 6, dans lequel,
dans le premier dispositif portable de tête, le premier processeur (110) est agencé pour générer une demande de session basée sur la détection d'un geste du porteur du premier dispositif portable de tête, ou
dans l'autre dispositif portable de tête, l'autre processeur (160) est agencé pour générer une confirmation de session basée sur la détection d'un geste du porteur de l'autre dispositif portable de tête.

8. Système de communication selon l'une quelconque des revendications 2 à 7, dans lequel dans le premier dispositif portable de tête, le premier processeur (110) est agencé pour générer une demande de session basée sur la détection du geste du porteur de l'autre dispositif portable de tête, ou dans l'autre dispositif portable de tête, l'autre processeur (160) est agencé pour générer une confirmation de session basée sur la détection d'un geste du porteur du premier dispositif portable de tête.

9. Système de communication selon l'une quelconque des revendications 2 à 8, dans lequel, dans le premier dispositif portable de tête, le premier processeur (110) est agencé pour déterminer un type de session de communication et le type de session de communication est l'un parmi
- une session d'accueil entre le premier dispositif portable de tête comme hôte et l'autre dispositif portable de tête comme dispositif accueilli;
- une session d'accueil entre le premier dispositif portable de tête comme dispositif accueilli et l'autre dispositif portable de tête comme hôte;
- une session de communication vocale;
- une session de partage d'informations visuelles;
- une session de partage d'une périphérique.

10. Système de communication selon l'une quelconque des revendications 2 à 9, dans lequel
- dans le premier dispositif portable de tête, le premier processeur (110) est agencé pour déterminer un type de session de communication sur la base d'un geste du porteur du premier dispositif portable de tête ou du geste du porteur de l'autre dispositif portable de tête.

11. Système de communication selon l'une quelconque des revendications 2 à 10, dans lequel
- dans le premier dispositif portable de tête, le premier processeur (110) est agencé pour, dans la session de communication, fournir une session d'interaction avec l'utilisateur, et
- dans l'autre dispositif portable de tête, l'autre processeur (160) est agencé pour, dans la session de communication, fournir la session d'interaction avec l'utilisateur, la session d'interaction avec l'utilisateur comprenant au moins l'un parmi
- une communication vocale entre les porteurs des dispositifs portables de la tête,
- une partage d'informations ou une utilisation interactive des informations entre les porteurs des dispositifs portables de tête, les informations comprenant au moins l'un parmi
- un texte;
- des images;
- un vidéo;
- des données générées par ordinateur;
- une partage d'une périphérique ou d'une partie d'une périphérique tel que
- une partage d'un écran d'ordinateur;
- une prise de contrôle d'un afficheur de l'autre dispositif portable de tête par le premier dispositif portable de tête.

12. Système de communication selon l'une quelconque des revendications 2 à 11, dans lequel
- dans le premier dispositif portable de tête, le premier processeur (322) est agencé pour fonctionner comme un dispositif accueilli (320) dans une session d'accueil comme la session de communication, et
- dans l'autre dispositif portable de tête, l'autre processeur (301) est agencé pour fonctionner comme hôte (300) dans la session d'accueil, l'hôte étant agencé pour se coupler à au moins une périphérique (310, 311, 312),
l'hôte étant agencé pour une connexion sans fil avec le premier dispositif portable de tête comme dispositif accueilli, et
pour fournir un accès à la périphérique pour le premier dispositif portable de tête,
le premier dispositif portable de tête étant agencé pour une connexion sans fil comme dispositif accueilli de l'hôte pour accéder à la périphérique.

13. Procédé de communication à utiliser par le premier dispositif portable de tête selon la revendication 1, le premier dispositif portable de tête (100) étant agencé pour une communication sans fil et comprenant une caméra (120) pour capturer une image d'environnement d'un environnement opérationnel pendant que le premier dispositif portable de tête est porté par un premier porteur, le procédé comprenant les étapes suivantes exécutées par le premier dispositif portable de tête (100):
- traiter l'image d'environnement pour détecter un autre dispositif portable de tête, qui est porté par un autre porteur dans l'environnement opérationnel à une distance opérationnelle du premier porteur, sur la base d'une direction d'observation du premier porteur,
- identifier l'autre dispositif portable de tête à la distance opérationnelle sur la base d'une propriété visuelle détectable à distance, la propriété visuelle étant au moins l'une parmi une lumière codée comme émanant de l'autre dispositif portable de tête et un geste du porteur de l'autre dispositif portable de tête, et
- établir une session de communication entre le premier dispositif portable de tête et l'autre dispositif portable de tête.

14. Procédé selon la revendication 13, comprenant au moins l'un parmi
- l'établissement d'une session de communication sécurisée en dérivant un paramètre de contexte basé sur un vecteur en triangulant un angle ou une distance entre les dispositifs portables de tête vers un point de référence commun et en utilisant le paramètre de contexte basé sur un vecteur comme un secret commun pour dériver une clé de cryptage,
- la détection d'une confirmation de session en détectant le geste du porteur de l'autre dispositif portable de tête, et
- la détection d'une demande de session en détectant un geste du porteur du premier dispositif portable de tête.

15. Programme d'ordinateur comprenant des instructions de code pour amener le premier dispositif portable de tête selon la revendication 1 à exécuter le procédé des revendications 13 ou 14.
